# EUROPEAN PATENT SPECIFICATION

(11) **EP 4 579 313 B1**
(45) Date of publication and mention of the grant of the patent: **28.01.2026**
(21) Application number: 23383401.9
(22) Date of filing: 29.12.2023
(51) Int. Cl.: G02B 27/01, G07D 7/00, G07D 7/17, G07D 7/20, G07D 7/202

(54) **SYSTEM AND METHOD FOR SIMULATING A BANKNOTE DESIGN ON A PHYSICAL SUBSTRATE MANIPULABLE BY A USER**
SYSTEM UND VERFAHREN ZUR SIMULATION EINES BANKNOTENENTWURFS AUF EINEM PHYSIKALISCHEN, DURCH EINEN BENUTZER MANIPULIERBAREN SUBSTRAT
SYSTÈME ET PROCÉDÉ DE SIMULATION D'UNE CONCEPTION DE BILLETS DE BANQUE SUR UN SUBSTRAT PHYSIQUE MANIPULABLE PAR UN UTILISATEUR

(43) Date of publication of application: 02.07.2025
(73) Proprietor: Banco de Espana, 28014 Madrid (ES)
(72) Inventor: León Martínez, Fernando, 28027 Madrid (ES); López Soblechero, Miguel Vicente, 28027 Madrid (ES); Ortuño Molinero, Rubén, 28027 Madrid (ES); García López, Cristina, 28027 Madrid (ES); Álvarez Rodríguez, Diego, 28027 Madrid (ES); Sánchez Echave, José María, 28027 Madrid (ES); Alcañiz Raya, Mariano Luis, 46022 Valencia (ES); Guixeres Provinciale, Jaime, 46022 Valencia (ES); Beneito Brotons, Daniel, 46022 Valencia (ES); Ortega Pérez, Mario, 46022 Valencia (ES)
(74) Representative: Clarke, Modet y Cía., S.L.

(56) References cited:
- US-B1- 6 408 257
- EUROPEAN CENTRAL BANK: "The Europa series of Banknotes", 1 January 2019 (2019-01-01), XP002811686, ISBN: 978-92-899-3820-4, Retrieved from the Internet <URL:https://www.suomenpankki.fi/globalassets/en/money-and-payments/euro-banknotes/en_cashier-poster-100_200-euro_web.pdf> [retrieved on 20240603], DOI: 10.2866/13907

## Description

### FIELD OF THE INVENTION

The invention relates to virtual reality or mixed reality, graphic computing, artificial vision and artificial intelligence applied to the prototyping of new banknote designs. In particular, the invention relates to a computer-implemented method and system for simulating a banknote design on a user-manipulable physical substrate.

### BACKGROUND OF THE INVENTION

The process until a new banknote (hereinafter, simply banknote) enters circulation is long and expensive. Issuing banks must ensure, among other things, that the new banknote does not present problems for users (e.g., authentication, identification) and is consequently accepted for use by the public. For this reason, the issuing banks require that the new banknote design undergo various tests before being launched on a large scale.

Among the tests, an evaluation of different aspects (for example, authentication, identification) of the new banknote design by a group of users is required. Carrying out this evaluation implies a high cost since it is necessary to manufacture physical prototypes of the banknote with the new design incorporated. For this, the issuing bank must dedicate material and human resources, for its printing with paper money.

Mention that, before the launch of a new design of a new series, it is necessary to manufacture several physical prototypes for evaluation. To choose a suitable design, the "Touch, look and turn" method must be applied. This method can be found explained in the 2019 European Central Bank document, entitled "The Europa series of banknotes" (ISBN 978-92-899-3820-4, doi:10.2866/13907). By applying it, the degree of safety, preference and attraction that a prototype with a design causes in users can be evaluated. This physical prototyping involves material resources and time for its execution.

From US 6 408 257 B1 a method and apparatus are known for viewing and interacting with a real world item, such as a piece of paper held and controlled by a user, with a virtual display of an image thereon to give the illusion of holding a printed version of the image without actually printing the image.

### SUMMARY OF THE INVENTION

In practice, traditional physical prototyping has a limited ability to perform comprehensive and in-depth perception studies due to the resources required in its manufacture.

In view of this situation, it would be desirable for issuing banks and related entities to be able to produce and analyze different banknote designs, efficiently, allowing a user to perceive it realistically during a set of use tests, and in turn avoid the high costs and long times associated with traditional physical prototyping.

It would also be desirable that, as part of the analysis, a user can apply the verification of the legitimacy of the new banknote through the "Touch, look and turn" method.

The present invention is conceived in light of the above and proposes a solution for a rapid prototyping of new banknote designs, capable of imitating the main sensory characteristics of physical banknote prototypes.

The invention facilitates the testing of banknote designs, allows a tactile experience through a manipulable physical substrate and visual experience through a simulation that recreates a banknote design on the manipulated physical substrate.

By means of a computer, (understood in a broad sense, as a device with processing capacity) images of the user are processed by manipulating the physical substrate acquired by one or more cameras. Through virtual or mixed reality glasses, the user can view the design of the banknote while manipulating it. The computer builds a virtual prototype and synchronizes it as the user manipulates the physical substrate. To do this, information from the hand or hands is extracted from the images by manipulating the physical substrate, detecting how one or more tracking markers present on the physical substrate evolve at different points in time. Transformation information is extracted from the physical substrate (through the detected tracking markers) and transformations are determined in the manipulated physical substrate to generate a 3D mesh accordingly. On this 3D mesh corresponding to the manipulated physical substrate, one or more design elements are simulated so that the virtual prototype can be displayed on the glasses in synchrony with the manipulation carried out by the user on the physical substrate.

The invention allows to obtain information from the user about aspects related to any of the different design elements, for example: a relief print, a security thread, a transparent window, a hologram, a colored zone, a character movement zone, a watermark, a matching motif, a serial number, a shaded image, a dynamic color change zone, a typography, etc. In general, the design elements can be classified into visual and tactile, and usually function as security complements of the banknote.

The information requested from the user may include their adequate or inadequate assessment (or on a scale with more degrees) of a certain element of the design regarding some aspect such as visibility or legibility, in various simulated conditions such as different external luminosity conditions, banknote fouling, banknote deterioration, etc.

Information that can in addition to - or instead of - be requested, can also be captured. For example, techniques such as those described in patent application EP3757950A1 entitled method and system for sorting banknotes based on neuro analysis can be applied. Specifically, parameters can be obtained on the viewing time, sequence of the gaze on elements of interest in the design on both previously defined sides.

Due to the information from the users, modifications can be incorporated with respect to the starting design that are transferred to the mass production of the future real banknote quickly and at little cost.

To this end, the invention proposes a system according to claim 1, a method according to claim 8 and a digital storage medium according to claim 15. Additionally, various particular embodiments of an advantageous character are defined in the dependent claims.

### BRIEF DESCRIPTION OF THE DRAWINGS

In order to complete the description of the invention and aiming to help a better understanding of its characteristics, according to a preferred example of embodiment thereof, a set of drawings is attached in which, with illustrative and non-limiting character, the following figures have been represented:
FIG. 1A schematically shows a block diagram with different elements of an embodiment of the system.
FIG. 1B schematically shows an embodiment of the system during use by a user.
FIG. 1C shows schematically the sensory aspects of the physical and virtual part of the invention for the user and its relationship with banknote authentication.
FIG. 2 shows a 50 euro banknote as a design example with different visual and tactile design elements.
FIG. 3A schematically shows a physical substrate with different tactile markings and tracking markers.
FIG. 3B schematically shows a physical substrate to be manipulated with various tracking markers.
FIG. 3C schematically shows a physical substrate with a single tracking marker for the entire surface of a side.
FIG. 4 shows the steps of the generation stage of a virtual prototype.
FIG. 5 shows different steps of a texture mapping stage to the virtual prototype.
FIG. 6 shows in greater detail the step of determining the transformations in the case of non-rigid transformations in deformable markers.

### NUMERICAL REFERENCES

1 Banknote design.
2 Physical substrate.
3 User.
4 Computer.
5 Virtual prototype.
6 Camera.
7 Glasses.
8 Interface.
9 Printing.
21 Tracking marker.
21b Transition regions.
22 Tactile marking.
31 Hand of the user.
32 Spinning action.
33 Action of touching.
34 Action of looking.
41 Computer processor.
50 Virtual scene.
51 3D mesh.
52 Base image.
53 Variable transparency zone.
54a First version of the prototype.
54b Second version of the prototype.
54c Third version of the prototype.
54d Fourth version of the prototype.
55 Translucent zone.
57 Dynamic effects zone.
58 Three-dimensional elements.
62 Hologram
63 Watermark.
64 Color changing ink
65 Transparent window.
100 System.
400 Stage for generating a virtual prototype of a banknote.
401 Step for generating a 3D (static) mesh.
402 Step for adding a base image of each side of the banknote to the 3D mesh.
403 Step for defining one or more variable transparency zones.
404 Step for defining one or more translucent zones.
405 Step for defining one or more dynamic effect zones.
406 Step for simulating three-dimensional elements.
500 Substage for modifying a 3D mesh.
501 Step for synchronizing the movement of the physical substrate and the representation of the modified 3D mesh.
501a Step for capturing spatial transformation information of the physical substrate. 501b Step for capturing hand position information.
502 Step for determining transformations of tracking markers.
502a Step for detecting markers.
502a1 Step for identifying a marker.
502a2 Step for locating corners of the marker.
502b Step for determining a rigid transformation.
502c Step for determining a non-rigid transformation.
503 Step for mapping transformations to the virtual prototype.

### DETAILED DESCRIPTION OF THE INVENTION

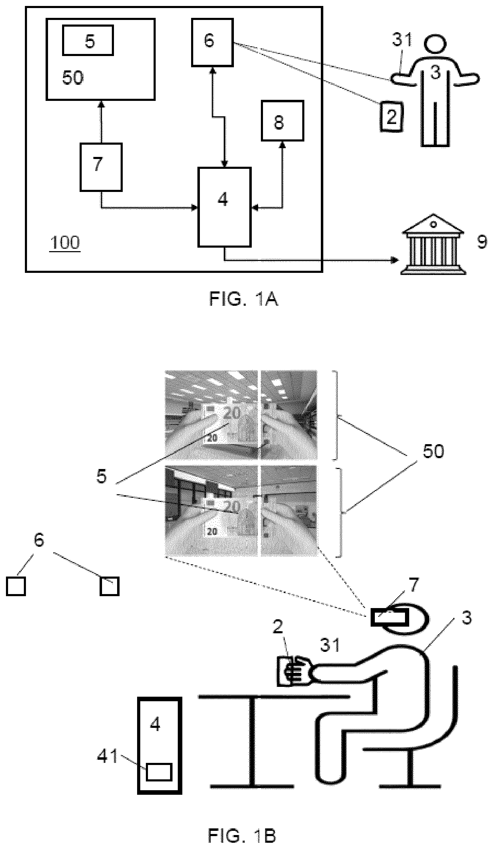

FIG. **1A** illustrates the main components of an embodiment of the system **100** at a very high level.

This system **100** is configured to interconnect and synchronize the virtual with the physical or real. The system **100** includes a computer **4,** virtual reality or mixed reality glasses **7** and at least one camera **6** for detecting and tracking a physical substrate **2.** The techniques described are applicable to both technologies.

In virtual reality glasses, all the content that is displayed is artificial. Therefore, a virtual scene is created, a totally synthetic environment, in which to show the generated virtual prototype.

In the case of mixed reality glasses, artificial content and real content are merged. Thus, the generated virtual prototype is shown superimposed on a real physical environment.

The system **100** allows virtual prototype simulations to be performed in the two types of environments. A physical real environment, where you can evaluate virtual prototypes superimposed on your physical real environment or a completely virtual environment.

The physical substrate **2** includes tracking marks and has physical characteristics similar to that of a real banknote. Using the computer **4** and the camera **6** directed to said physical substrate **2,** a virtual prototype **5** is generated to test a given banknote design. This virtual prototype **5** is displayed three-dimensionally on the glasses **7.** With the information obtained from the user **3,** it can be determined whether or not to modify the banknote design with new specifications or if it is suitable to be manufactured in a printing house **9** of the issuing bank.

In particular embodiments, the computer **4** may be externally connected to the glasses **7** (virtual reality or mixed reality) or be fully integrated into the glasses **7** themselves. Alternatively or additionally, the glasses **7** themselves may have the camera **6** integrated.

As will be explained below, base images corresponding to both sides of the banknote design are used to model a 3D banknote design and generate a virtual prototype **5.** Base images can be generated digitally from scratch or digitized by photograph or scan if they already exist. By base image is meant an image of the banknote without dynamic effects of the same, that is, with the drawings that are invariant to the angle of view of the user. These base images are processed to incorporate different visual effects that enrich the virtual prototype **5.** Fundamentally, variable transparency zones (e.g., opaque or transparent), translucent zones (e.g., images visible only through light such as watermarks) and zones of dynamic visual effects according to the angle of incidence of light (e.g., with a three-dimensional effect such as a hologram, or color changes) are defined. Banknote fouling or deterioration effects may also be simulated.

The system **100** carries out a generation of the prototype **5.** The system **100** can store in the computer **4** the information corresponding to a set of virtual prototypes **5** already generated compatible with a certain physical substrate **2.** In a simple manner, the user **3** may analyze various banknote designs.

The system **100** carries out a texture mapping, one or more cameras **6** connected to the computer **4** collect information and process it by means of a series of algorithms to extract in real time:
- a first data set with the position of the hands **31** of the user **3;**
- a second data set with the rotation, translation and deformation of the physical substrate **2.**

By combining these data sets, a representation of the virtual prototype **5** on the glasses **7** is synchronized according to the manipulation performed by the user **3** of the physical substrate **2** (e.g., shape changes, occlusions, etc.).

The representation of the virtual prototype **5** includes a contextualization for simulating the dynamic effects generated in the interaction of the virtual prototype **5** with a virtual scene **50** (e.g., holograms or inks that change color with lighting). The system **100** contextualizes in said virtual scene **50** the virtual prototype **5** of the desired banknote design. The virtual scene **50** corresponds to a three-dimensional environment in which it is desired to simulate the interaction of the user **3** with the banknote design. The virtual scene **50** is simulated in real time on the computer **4.** The system **100** may store in the computer **4** information corresponding to a set of different virtual scenes **50.** For example, inside a store or a supermarket, in an outdoor zone, etc. All this allows testing the virtual prototype **5** in different lighting conditions and analyzing the visual perception of the user **3** through the glasses **7** and also the tactile and auditory perception with respect to the physical substrate **2.**

A menu allowing the user **3** to select an environment and a banknote design may be displayed by an interface **8** (e.g., a touch screen). The user **3** can then put on the glasses **7** to explore the behaviour of the banknote design in different situations according to various available virtual scenes **50** and from different angles and positions. With the result of the user experience **3,** certain aspects of the design can be validated for subsequent manufacture in a printing house **9,** including the arrangement or size of each security complement such as transparency zones (e.g., window), translucent (e.g., watermark), of dynamic effects (e.g., hologram).

In the system **100,** eye tracking of the user **3** can be implemented, the duration of characteristic gestures of the user **3** can be identified and recorded when manipulating the physical substrate (turning, tilting, flipping, tearing, wrinkling). To obtain quantifiable information from the user **3,** the techniques described in EP3757950A1 are applicable for detecting biometric signals with one or more cameras in the interactions that the user performs by manipulating a banknote, and capture their behavior, (eye tracking, facial expression, etc.) to classify the banknote according to a neurometric indicator.

FIG. **1B** illustrates an embodiment of the invention as a system **100** including a computer **4** that is programmed to generate a virtual prototype **5** of a banknote.

The virtual prototype **5** includes a 3D digital model of a physical substrate **2** associated with the banknote. The physical substrate **2** can be manipulated by a user **3** in a real way and includes tactile markings (rigid or flexible, embossed or smooth) which together with dimensions and material characterise various physical aspects of the banknote design. Building the virtual prototype **5** preferably includes the application of a 3D meshing technique.

One or more cameras **6** are directed towards the scene where the user **3** manipulates the physical substrate **2.** The images captured by the cameras **6** are processed in the computer **4** to detect the hand **31** of the user **3** and the physical substrate **2.** Texture mapping techniques described later are applied to the physical substrate **2.**

With the help of the computer **4,** a sequence of images of the virtual prototype **5** is represented on virtual reality or mixed reality glasses **7** according to the movements made by the user **3** and transferred to the virtual scene **50.** This virtual scene **50** may be selected.

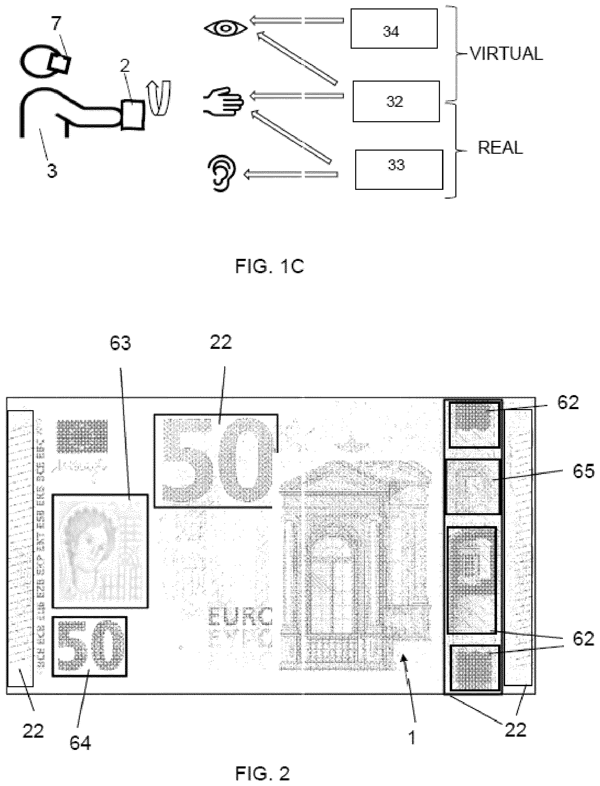

FIG. **1C** schematically illustrates how manipulation is applied for the verification of the legitimacy of a physical substrate **2** by a user **3** with the glasses **7** by means of the user actions of looking **31,** turning **32** and touching **33.** In certain turning **32** and touching **33** manipulations the sound of banknote paper can also be heard. The proposed system allows users to perceive these feelings without the need to manufacture a physical prototype of the banknote.

FIG. **2** illustrates a 50 euro banknote as an example of design **1** in which different security complements are appreciated. Concretely, visual design elements such as holograms **62,** a watermark **63,** color changing ink prints **64** and a transparent window **65** can be found. Tactile design elements such as tactile markings **22** (smooth corresponding to the hologram zone or embossed on the edges) can also be found. Preferably, a physical substrate is produced that mimics these tactile features while simulating the visual features with the system to simulate a proposed banknote design.

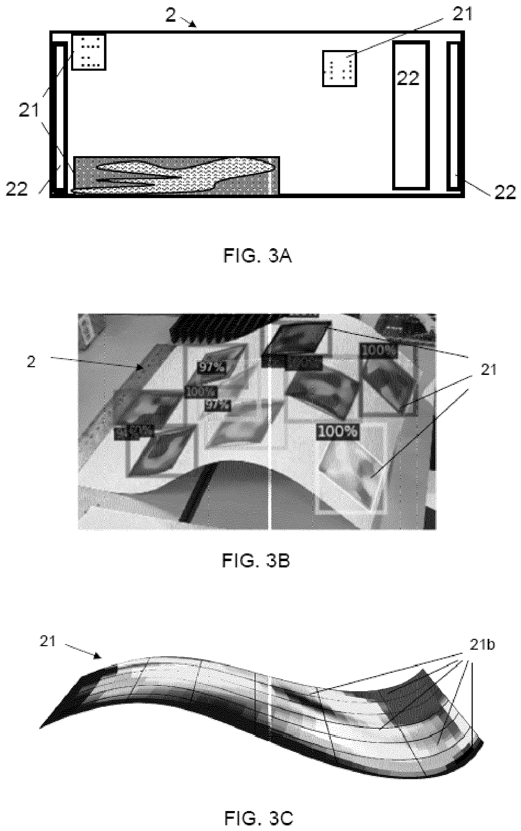

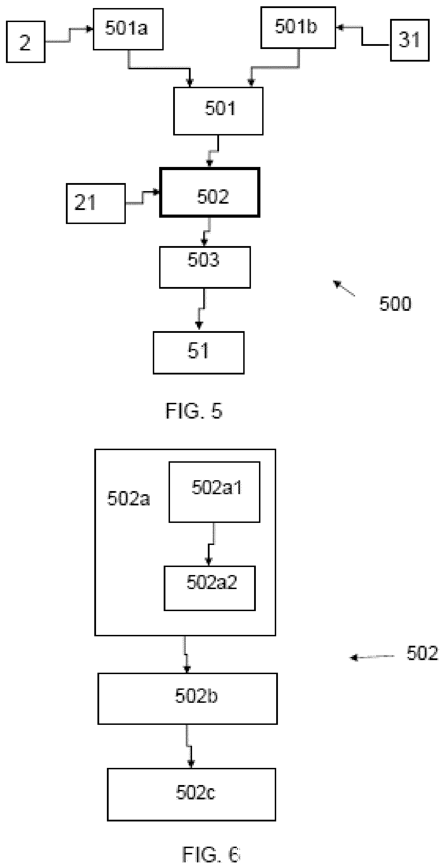

FIG. **3A** schematically illustrates the generic structure of a side of a physical substrate **2** to be used, for example, in the system of FIG. 1A, 1B or in the stage of FIG. 5. The physical substrate **2** is manipulable and has properties similar to a real banknote. Among the properties of the physical substrate, it should be noted that it is preferably made of a material with a sound similar to that of the paper money of the real banknote. For example, tactile markings **22** (embossed or smooth, flexible or rigid) and with a determined shape, size and position on each side of the physical substrate **2.** Preferably, such tactile markings **22** coincide with the same tactile markings incorporated in the one or more banknote designs that it is desired to simulate in the virtual prototype (e.g. to coincide with the design shown in FIG. 2).

To achieve precise synchronization of the physical substrate **2** with its corresponding computer-generated virtual prototype, tracking markers **21** for spatial tracking and deformation measurement that are used by the cameras associated with the glasses of a virtual reality or mixed reality system are incorporated into the physical substrate **2.** Either one or more external cameras or integrated into the glasses themselves.

The tracking markers **21** are visual representations optimized for detection and decoding in real-world settings. Tracking markers **21** can be fundamentally of two types. Some include a pattern of dots (upper markers), others a pattern of chromatic zones (lower marker). Both are generated by combining steganography techniques with convolutional neural networks and generative models so that the patterns are distinctive and optimized to be decodable in real-time applications. Tracking markers **21** may have a configurable size.

FIG. **3B** shows a possible physical substrate **2** with several tracking markers **21** as color zones detected in a rectangular frame on a portion of the surface of each side of the physical substrate **2.** Each tracking marker **21** contains a palette of vibrant colors that vary between red, yellow, green, blue and purple tones that facilitate its tracking in space and allow its deformation to be determined.

FIG. **3C** shows a possible physical substrate **2** with a tracking marker **21** with characteristics similar to those mentioned in FIG. 3B but extending over the entire surface of the physical substrate **2.** As in FIG. 3B, the colors are distributed in a pattern that appears to be somewhat diffuse, with smooth transitions between regions **21b,** resulting in multiple gradients. There are no clearly defined shapes or symbols, but rather a fluid and continuous mixture of colors. The corners of the tracking marker appear to be more saturated, while the center has lighter, mixed shades. The resolution of the tracking marker **21** is relatively low, which can cause finer details to be lost and colors to merge more sharply.

In the following, various aspects of processing in an example method for simulating a banknote design on a physical substrate are explained in greater detail.

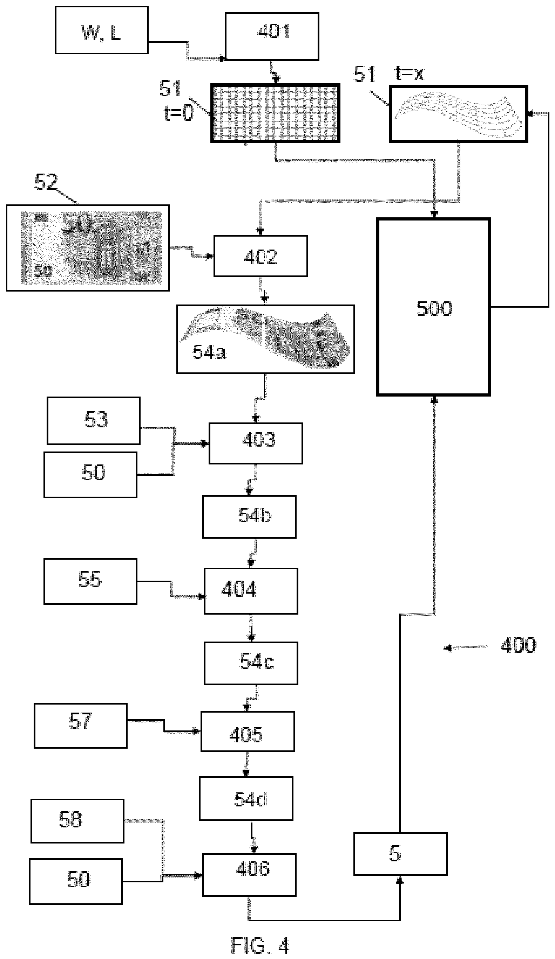

FIG. **4** illustrates different steps of a first stage **400** of generating a virtual prototype **5** of a banknote. The first stage **400** follows a sequence of steps in which layers are incorporated to achieve a high level of realism. The steps of this stage **400** are implementable in computer(s), and are as follows:
A first step **401** for generating a starting 3D mesh **51** (t=0), i.e., without manipulation. This 3D mesh is a static, three-dimensional and flat representation of a surface comprising a collection of vertices joined by edges, with a shape (width, W and length, L) according to the design (size) of the physical substrate. As a result of this first step **401,** a version of the virtual prototype **5** is obtained with the size of the banknote without any color or image, or deformation that facilitates subsequent processing.

Next, follow the steps of a substage **500** to periodically, or every different time intervals, modify the 3D mesh **51** that in its initial instant was generated from step **401,** by tracking the physical substrate (explained in detail in FIG. 5). The computer, to reflect the manipulation of the physical substrate by the user, applies transformations with this 3D mesh **51** so that it changes position, rotates and/or deforms, moving each of its edges in space, based on instructions generated dynamically according to the tracking carried out with the cameras with respect to the tracking marker or markers **21** present in the physical substrate. As a result of this substage **500,** a closed-loop process is obtained that applies transformations (e.g., a deformation, translation and/or rotation) to the 3D mesh **51** every certain time interval (t=x) but without any color or image so that other subsequent steps in stage **400** provide an updated version of the virtual prototype **5.**

As a particular case, if it is only desired to statically simulate a design of the banknote, without manipulating it, substage **500** would be dispensed with and the version of the starting 3D mesh **51** t=0 would be worked on following an open loop.

A second step **402** for adding a base image **52** of each side of the banknote to the 3D mesh **51.** The base image **52** does not comprise security complements such as transparency, holograms, threads or inks. As a result of this second step **402,** a first version **54a** of the virtual prototype **5** is obtained in which the shape of the real banknote and the base image **52** can be displayed on both sides according to the design.

A third step **403** for defining one or more variable transparency zones **53** present in the banknote design to the first version **54a** of the virtual prototype **5.** Preferably, the variable transparency zones **53** are transparent, opaque or semi-transparent. A transparency mask is developed that includes information according to gray levels in different regions associated with the variable transparency zones **53.** A first shader is developed which takes into account the angles between a light source, the physical substrate and the user point of view in a virtual scene **50,** these levels of transparency will be applied to the base image **52.** As a result of this third step **403,** a second version **54b** of the virtual prototype **5** is obtained, which adds the variable transparency zones **53** to the first version **54a.**

By shader is meant a program with instructions for coloring each pixel according to various variables. One or more shaders are applied to an object to change its final appearance. The entries to the shader usually include the original color of the object, the incident light, etc. and with them the final color that a certain pixel of the object will have is calculated.

A fourth step **404** for defining adding one or more translucent zones **55** creating a composite texture according to watermarks on the actual banknote (see FIG. 2, #63), these translucent zones **55** include images visible only through a light. A second *shader* is developed that uses as input parameters: angle of incidence of light, these translucent zones and the version of the virtual prototype from the third step **403.** As a result of this step **404,** a third version **54c** of the virtual prototype **5** of a banknote is obtained, which adds the translucent zones **55** to the second version **54b.**

A fifth step **405** for defining dynamic effect zones **57,** such as holograms, threads, and inks with dynamic color changes. This step employs algorithms that modify the color of the base images based on the angles between the light source, the banknote virtual prototype **5,** and the user point of view in the virtual scene **50.** In this step, the base images **52** and each of the dynamic effects **57** (holograms, threads and inks) are mainly used and a specific *shader* is developed for each of them so that they change shape or color depending on the angle of incidence of the light. As a result of this step **405,** a fourth version **54d** of the virtual prototype **5** of a banknote is obtained, which adds the dynamic effect zones **57** to the third version **54c.**

The sixth step **406** to simulate three-dimensional elements **58** in the fourth version **54d** and obtain the virtual prototype **5.** For this, for example, the "Render to Texture" technique is used, which renders a 3D object according to the position of the physical substrate with respect to the user point of view and the angle of incidence of light in a virtual scene **50** with the relative position of each 3D element **58.** The image obtained from this rendering is applied directly to the final position of the virtual prototype **2** where said 3D element **58** must go, overlaying the image that had been obtained in the fifth step **405,** as if it were an adhesive. In this way, the rendered 3D element moves synchronously according to the movement in any of the spatial axes of the virtual prototype **5.** It is clarified that, by rendering is meant a process by which an object is represented on the screen from an observer point of view.

As described in steps **405** and **406,** to improve the visual experience, a number of algorithms can be applied that allow visual effects to be simulated from a predefined list. These algorithms include most of the security complements that a real banknote presents, such as, but not limited to:
- Color changing inks according to the angle of incidence of the light.
- Safety thread.
- Hologram.
- Watermarks.
- Matching motif.
- Serial number.
- Shaded image.
- Transparent window.
- Smooth or embossed printed elements.

These security complements are simulated through the implementation of algorithms that calculate the color, reflection and transparency of each pixel based on the origin of the light source(s) and the user point of view. The effect of a given complement is based on a combination of a set of different textures and color or pixel transparency calculations.

Finally, a series of algorithms are optionally applied that will allow generating fouling and deterioration effects of the virtual prototypes of generated banknotes. These algorithms employ advanced image processing and material modeling techniques to realistically simulate the aging, staining, tearing, and other wear and tear characteristic of physical banknote circulation.

The system and method for simulating a banknote design on a physical substrate may incorporate algorithms that simulate other effects. Artificial intelligence techniques can be incorporated to learn and adapt to historical wear patterns and specific characteristics of each banknote to achieve more realistic effects.

FIG. **5** illustrates different steps of a substage **500** for modifying the 3D mesh **51** by tracking the physical substrate **2.** For this tracking, the tracking markers **21** of the physical substrate **2** (as described in FIGs. 3a-3c) that allow spatial tracking and deformation measurement. Substage **500** includes several steps.

Step for synchronizing **501** (with a computer) the movement of the physical substrate **2** captured by a camera. To do this, a step is performed for capturing spatial transformation information **501a** of the physical substrate **2** and a step for capturing position information **501b** of the hand or hands **31** of the user **3** according to the user point of view **3.**

Algorithms based on machine vision and deep learning used in a step for determining **502** the relative transformations of the tracking markers **21** and in a step for mapping **503** such transformations to the 3D mesh **51** from the user point of view for subsequent representation as a virtual prototype in virtual or mixed reality glasses are implemented in the computer.

Mathematically, there are three main types of transformations of a shape (e.g., the physical substrate): translations, produced by moving the shape; rotations, produced by rotating the shape; scales, produced by turning the shape like a mirror image. Only rigid transformations keep the shape, size and angles equal between parts. The image is the shape in its new position and direction.

A fast and reliable data transmission is required that allows the detection of tracking markers **21** in real time, that is, in very short time intervals, from the camera(s) in the captured images, together with metadata such as hand masks from the virtual reality or mixed reality glasses to the computer.

A series of techniques are applied to calibrate the cameras, adjusting the intrinsic and extrinsic attributes through various methods to optimize tracking and rendering.

The algorithms developed have the ability to recognize two types of tracking markers:
a) rigid and flat marker, maintaining a fixed shape.
b) deformable markers that may undergo minor and moderate deformations (5-30 degrees), such as folds or bends of the physical substrate.

Rigid, flat markers are commonly used in augmented reality applications and computer vision techniques, and maintain a fixed shape. They are recognized by their distinctive patterns such as QR codes, specific symbols, fiducial markers, or sufficiently textured images that offer unique characteristics for their detection. Fiducial markers are patterns designed to be easily identifiable and are widely used for their effectiveness in recognition by computer vision techniques. Deformable markers are explained below.

Techniques are applied to accurately map textures with deformation-induced shape changes in tracking markers by applying rigid and non-rigid transformations.

Techniques are applied to detect and assign textures in occlusion situations in which the tracking marker is partially visible or hidden from the camera, and ensure consistent operation when the user holds the physical substrate with their hands.

Real-time operation is crucial for an optimal user experience in mixed reality applications. A rate of 60 frames per second ("fps: frames per second") is estimated to avoid flickers or delays that may disturb the immersion. The algorithms therefore comprise efficient optimizations to minimize computational latency and process the tasks of marker detection, tracking and texture mapping within the 16.67 milliseconds assigned to each frame.

An embodiment of the system **100** achieves real-time performance and maintains a stable frame rate by adopting parallel programming techniques and optimizing the execution of neural networks on the computer GPU. For example, "TensorRT" an NVIDIA library can be used so that deep learning models, after being trained, are optimized for faster and more efficient execution on the GPU. This optimization is accomplished through techniques such as layer fusion and neural network quantization. Additionally, eye-tracking information, usually incorporated into glasses, can be used to tune and optimize computational resources.

The computer communicates the processed data in real time to the virtual reality or mixed reality glasses, including the relative transformation, the position of the tracking marker and the texture mapping. A standard messaging protocol is used for this communication, designed to ensure an efficient and secure transmission of data. This protocol facilitates two-way communication between devices, ensuring that the information sent is received without errors and in the right order, and easily adapts to different infrastructures and network needs. Its standard character makes it compatible with platforms and systems, which allows easy integration into various applications and scenarios.

Continued detection of tracking markers 21 should accommodate changes in scale, lighting adjustments, and variations in the perspective of such markers.

In **FIG. 6** the step for determining **502** the transformations is described in greater detail, in the case of non-rigid transformations in deformable markers which is in turn decomposed into several intermediate steps:
Step for detecting markers **502a** which is in turn composed of a step for identifying a marker **502a1** in which an ID associated with each marker is determined. The step for identifying the marker **502a1** is followed by a step for locating corners **502a2** where the corners of the marker (generally four) are detected, which are employed for the transformation steps.

Different detection techniques may be employed: for example, as described in "DeepFormableTag: End-to-end Generation and Recognition of Deformable Fiducial Markers" that adapts traditional image detection techniques with advanced Deep Learning techniques specific to deformable markers.

Follow a step for determining a rigid transformation **502b,** after detecting the marker. This step **502b** involves determining how the marker moves rigidly from one frame to another, without considering deformations. It is done by calculating a homography matrix, which captures rigid transformations such as rotations and translations between consecutive frames.

It follows a step for determining a non-rigid transformation **502c** by determining the deformation of the physical substrate once the marker (s) has been detected. Non-rigid deformations refer to changes in the shape of the marker that are not simple displacements. Determining these transformations is important for obtaining an accurate representation of the marker in space. Several techniques are applicable:
- Thin-Plate Splines (TPS): TPS is a robust technique that generates a deformed mesh that relates specific points of the deformed marker with equivalent points in a reference model, allowing an accurate representation of the deformations.
- Deformable Models or Active Contour Models (Snakes): These models represent a dynamic solution to the problem. They actively adapt to the contour of an object, in this case, to the marker. The most remarkable thing about these models is their ability to self-correct, adjusting in real time to the deformations present, guaranteeing an accurate and continuous tracking.

### Contextualization of the perception assessment environment

In addition to presenting the design of the banknote, the system or method uses a series of algorithms that allow the surrounding environment to be manipulated by computer graphics to create various virtual scenes **50** to be displayed with virtual reality glasses. This characteristic increases the realism of the perception experience and allows us to analyze how different environments influence perception.

These virtual scenes **50** may be selected by the user to visualize the manipulation of one or more banknote designs. The virtual scenes **50** incorporate a configuration of the environment by applying realistic textures. Once the environment is configured, a pre-computation of the lighting sources for the environment is performed to obtain a realistic appearance.

The initial set of developed environments includes:
- Neutral environment: This environment provides a controlled environment, such as a neuroscience laboratory, in which attention is focused exclusively on the perception of the banknote design without any external factors influencing the evaluation.
- Bank office environment: The simulation of a bank office environment allows the design of the banknote to be evaluated in a context in which it is regularly used and manipulated by professionals in the financial sector.
- Cash register environment: This environment aims to reproduce the cash register environment, offering a scenario in which the design of the banknote can be evaluated in the context of daily transactions, being able to evaluate the interaction and perception of both the cash professional (supermarket cashier) who receives the banknotes, and the customer who pays with the same banknotes.

These initial environments serve as a basis, and the scalability of the method allows the creation of additional environments based on needs.

The present invention should not be limited to the embodiments described herein. Other configurations may be made by those skilled in the art in view of the present description. Accordingly, the scope of the invention is defined by the following claims.

## Claims

1. System for simulating a banknote design (1) on a user (3)-manipulable physical substrate (2) comprising:
a physical substrate (2) representative of a banknote, wherein the physical substrate (2) has at least one tracking marker (21) on each side;
a computer (4);
a camera (6) configured to capture images of a user (3) manipulating the physical substrate (2);
virtual reality or mixed reality glasses (7) for the user (3), where said glasses (7) are operatively connected to the computer (4) and to the camera (6);
where the computer (4) is configured to generate a virtual prototype (5) synchronized with the physical substrate (2), where said virtual prototype (5) is generated by at least:
- generating a 3D mesh (51) corresponding to the physical substrate (2);
- periodically detecting one or more tracking markers (21) in the images captured by the camera (6) of the user (3) manipulating the physical substrate (2);
- extracting position data of at least one of the hands (31) manipulating the physical substrate (2) and transformation data of the physical substrate (2) by means of the detected tracking markers (21), the transformation data being relative to a rotation, a translation and/or a deformation;
- determining transformations in the physical substrate (2) with the transformation data;
- modifying the 3D mesh (51) in accordance with the determined transformations;
- simulating, in the modified 3D mesh (51), one or more design elements (62-65) by applying, on said modified 3D mesh (51), a base image (52) and at least one variable transparency zone (53), a translucent zone (55), a dynamic effects zone (57), and/or a three-dimensional element (58), wherein the design elements (62-65) are selectable from at least: a hologram (62), a color changing ink (64), a watermark (63), or a transparent window (65);
- visualizing the virtual prototype (5) on the glasses (7).

2. System according to claim 1, wherein, from the images of the user (3) manipulating the physical substrate (2) captured by the camera (6), the computer (4) is configured to detect biometric signals related to the base image (52) and/or to at least one simulated design element (62-65), and to determine whether the detected biometric signals are indicative of a suitable banknote design (1).

3. System according to claim 1 or 2, further comprising an interface (8) for requesting information from the user about the base image (52) and/or at least one simulated design element (62-65).

4. System according to claim 2 or 3, wherein the computer (4) is configured to modify or validate the design (1) of the banknote and the specifications for manufacturing in a printing house (9).

5. System according to any one of claims 1 to 4, wherein it is applied:
- a variable transparency zone (53) to simulate a transparent window (65),
- a translucent zone (55) to simulate a watermark (63), and/or
- a dynamic visual effects zone (57) to simulate a hologram (62) or a color changing ink (64).

6. System according to any one of claims 1 to 5, wherein the computer (4) is configured to generate a virtual scene (50) viewable on the virtual or mixed reality glasses (7).

7. System according to claim 6, wherein the computer (4) determines a user point of view (3) regarding a light source in the virtual scene (50) to simulate the dynamic visual effects zone (57), for the translucent zone (55) and/or for the variable transparency zone (53).

8. A method for simulating a banknote design (1) on a user (3)-manipulable physical substrate (2) comprising:
- providing a physical substrate (2) representative of a banknote, wherein the physical substrate (2) has at least one tracking marker (21) on each side;
- generating a 3D mesh (51) corresponding to the physical substrate (2);
- capturing, with a camera (6), images of the user (3) manipulating the physical substrate (2);
- generating a virtual prototype (5) synchronized with the physical substrate (2), where the virtual prototype (5) is viewable on virtual or mixed reality glasses (7), where generating said virtual prototype (5) comprises at least:
- detecting one or more tracking markers (21) in the images of the user (3) manipulating the physical substrate (2);
- extracting position data of at least one of the hands (31) manipulating the physical substrate (2) and transformation data of the physical substrate (2) relating to a rotation, a translation and/or a deformation;
- determining transformations in the physical substrate (2) with the transformation data;
- modifying the 3D mesh (51) in accordance with the determined transformations;
- simulating, in the modified 3D mesh (51), one or more design elements (62-65) selectable from at least: a hologram (62), a color changing ink (64), a watermark (63), or a transparent window (65) by applying, on said modified 3D mesh (51), a base image (52) and at least one variable transparency zone (53), a translucent zone (55), a dynamic effects zone (57), and/or a three-dimensional element (58);
- visualizing the virtual prototype (5) on the glasses (7).

9. The method according to claim 8, further comprising:
- detecting, from the images of the user (3) manipulating the physical substrate (2) captured by the camera (6), biometric signals related to the base image (52) and/or to at least one simulated design element (62-65), and
- determining whether the detected biometric signals are indicative of a suitable banknote design (1).

10. The method according to claim 8 or 9, further comprising requesting information from the user (3) through an interface (8) about the base image (52) and/or at least one simulated design element (62-65).

11. The method according to claim 8 or 10, further comprising modifying or validating the design (1) of the banknote and the specifications for manufacturing in a printing house (9).

12. The method according to any one of claims 8 to 11, wherein a variable transparency zone (53) is applied to simulate a transparent window (65), a translucent zone (55) to simulate a watermark (63), and/or a dynamic visual effects zone (57) to simulate a hologram (62) or a color changing ink (64).

13. The method according to any one of claims 8 to 12, further comprising generating a virtual scene (50) viewable on said virtual or mixed reality glasses (7).

14. The method according to claim 13, further comprising determining a user (3) point of view of a light source in the virtual scene (50) to simulate the dynamic visual effects zone (57), for the translucent zone (55), and/or for the variable transparency zone (53).

15. Digital storage medium comprising code instructions, which, when executed by one or more processors of the computer of the system according to claim 1, cause the system of claim 1 to execute the steps of the method for simulating a banknote design (1) on a user (3)-manipulable physical substrate (2) according to one of claims 8 to 14.

## Patentansprüche

1. System zur Simulation eines Banknotenentwurfs (1) auf einem vom Benutzer (3) manipulierbaren physikalischen Substrat (2), umfassend:
ein physikalisches Substrat (2), das eine Banknote darstellt, wobei das physikalische Substrat (2) mindestens eine Verfolgungsmarkierung (21) auf jeder Seite aufweist;
einen Rechner (4);
eine Kamera (6), die dazu konfiguriert ist, Bilder eines Benutzers (3) aufzunehmen, der das physikalische Substrat (2) manipuliert;
eine Virtual-Reality- oder Mixed-Reality-Brille (7) für den Benutzer (3), wobei die Brille (7) betriebsmäßig mit dem Rechner (4) und mit der Kamera (6) verbunden ist;
wobei der Rechner (4) dazu konfiguriert ist, einen virtuellen Prototyp (5) zu generieren, der mit dem physikalischen Substrat (2) synchronisiert ist, wobei der virtuelle Prototyp (5) mindestens durch Folgendes generiert wird:
- Generieren eines 3D-Netzes (51), das dem physikalischen Substrat (2) entspricht;
- periodisches Erkennen einer oder mehrerer Verfolgungsmarkierungen (21) in den von der Kamera (6) aufgenommenen Bildern des Benutzers (3), der das physikalische Substrat (2) manipuliert;
- Extrahieren von Positionsdaten von mindestens einer der Hände (31), die das physikalische Substrat (2) manipulieren, und von Transformationsdaten des physikalischen Substrats (2) mittels der erkannten Verfolgungsmarkierungen (21), wobei sich die Transformationsdaten auf eine Rotation, eine Translation und/oder eine Deformation beziehen;
- Bestimmen von Transformationen in dem physikalischen Substrat (2) mit den Transformationsdaten;
- Modifizieren des 3D-Netzes (51) gemäß den bestimmten Transformationen;
- Simulieren, in dem modifizierten 3D-Netz (51), eines oder mehrerer Entwurfselemente (62-65), indem auf das modifizierte 3D-Netz (51) ein Basisbild (52) und mindestens eine Zone mit variabler Transparenz (53), eine lichtdurchlässige Zone (55), eine Zone mit dynamischen Effekten (57) und/oder ein dreidimensionales Element (58) angewendet werden, wobei die Entwurfselemente (62-65) mindestens aus Folgendem ausgewählt werden können: einem Hologramm (62), einer farbwechselnden Druckfarbe (64), einem Wasserzeichen (63), oder einem transparenten Fenster (65);
- Visualisieren des virtuellen Prototyps (5) auf der Brille (7).

2. System nach Anspruch 1, wobei der Rechner (4) dazu konfiguriert ist, aus den von der Kamera (6) aufgenommenen Bildern des Benutzers (3), der das physikalische Substrat (2) manipuliert, biometrische Signale zu erkennen, die sich auf das Basisbild (52) und/oder auf mindestens ein simuliertes Entwurfselement (62-65) beziehen, und zu bestimmen, ob die erkannten biometrischen Signale auf einen geeigneten Banknotenentwurf (1) hinweisen.

3. System nach Anspruch 1 oder 2, ferner umfassend eine Schnittstelle (8) zum Anfordern von Informationen vom Benutzer über das Basisbild (52) und/oder mindestens ein simuliertes Entwurfselement (62-65).

4. System nach Anspruch 2 oder 3, wobei der Rechner (4) dazu konfiguriert ist, den Entwurf (1) der Banknote und die Angaben für das Herstellen in einer Druckerei (9) zu modifizieren oder zu validieren.

5. System nach einem der Ansprüche 1 bis 4, wobei Folgendes angewendet wird:
- eine Zone mit variabler Transparenz (53) zur Simulation eines transparenten Fensters (65),
- eine lichtdurchlässige Zone (55) zur Simulation eines Wasserzeichens (63), und/oder
- eine Zone mit dynamischen visuellen Effekten (57) zur Simulation eines Hologramms (62) oder einer farbwechselnden Druckfarbe (64).

6. System nach einem der Ansprüche 1 bis 5, wobei der Rechner (4) dazu konfiguriert ist, eine virtuelle Szene (50) zu generieren, die auf der Virtual- oder Mixed-Reality-Brille (7) betrachtet werden kann.

7. System nach Anspruch 6, wobei der Rechner (4) einen Blickpunkt des Benutzers (3) in Bezug auf eine Lichtquelle in der virtuellen Szene (50) bestimmt, um die Zone mit dynamischen visuellen Effekten (57), die lichtdurchlässige Zone (55) und/oder die Zone mit variabler Transparenz (53) zu simulieren.

8. Verfahren zur Simulation eines Banknotenentwurfs (1) auf einem vom Benutzer (3) manipulierbaren physikalischen Substrat (2), umfassend:
- Bereitstellen eines physikalischen Substrats (2), das eine Banknote darstellt, wobei das physikalische Substrat (2) mindestens eine Verfolgungsmarkierung (21) auf jeder Seite aufweist;
- Generieren eines 3D-Netzes (51), das dem physikalischen Substrat (2) entspricht;
- Aufnehmen von Bildern des Benutzers (3), der das physikalische Substrat (2) manipuliert, mit einer Kamera (6);
- Generieren eines virtuellen Prototyps (5), der mit dem physikalischen Substrat (2) synchronisiert ist, wobei der virtuelle Prototyp (5) auf einer Virtual- oder Mixed-Reality-Brille (7) betrachtet werden kann, wobei das Generieren des virtuellen Prototyps (5) mindestens Folgendes umfasst:
- Erkennen einer oder mehrerer Verfolgungsmarkierungen (21) in den Bildern des Benutzers (3), der das physikalische Substrat (2) manipuliert;
- Extrahieren von Positionsdaten von mindestens einer der Hände (31), die das physikalische Substrat (2) manipulieren, und von Transformationsdaten des physikalischen Substrats (2) in Bezug auf eine Rotation, eine Translation und/oder eine Deformation;
- Bestimmen von Transformationen in dem physikalischen Substrat (2) mit den Transformationsdaten;
- Modifizieren des 3D-Netzes (51) gemäß den bestimmten Transformationen;
- Simulieren, in dem modifizierten 3D-Netz (51), eines oder mehrerer Entwurfselemente (62-65), die mindestens aus Folgendem ausgewählt werden können: einem Hologramm (62), einer farbwechselnden Druckfarbe (64), einem Wasserzeichen (63) oder einem transparenten Fenster (65), indem auf das modifizierte 3D-Netz (51) ein Basisbild (52) und mindestens eine Zone mit variabler Transparenz (53), eine lichtdurchlässige Zone (55), eine Zone mit dynamischen Effekten (57) und/oder ein dreidimensionales Element (58) angewendet wird;
- Visualisieren des virtuellen Prototyps (5) auf der Brille (7).

9. Verfahren nach Anspruch 8, ferner umfassend:
- Erkennen, aus den von der Kamera (6) aufgenommenen Bildern des Benutzers (3), der das physikalische Substrat (2) manipuliert, von biometrischen Signalen, die sich auf das Basisbild (52) und/oder auf mindestens ein simuliertes Entwurfselement (62-65) beziehen, und
- Bestimmen, ob die erkannten biometrischen Signale auf einen geeigneten Banknotenentwurf (1) hinweisen.

10. Verfahren nach Anspruch 8 oder 9, ferner umfassend das Anfordern von Informationen vom Benutzer (3) über eine Schnittstelle (8) über das Basisbild (52) und/oder mindestens ein simuliertes Entwurfselement (62-65).

11. Verfahren nach Anspruch 8 oder 10, ferner umfassend das Modifizieren oder Validieren des Entwurfs (1) der Banknote und der Angaben für das Herstellen in einer Druckerei (9).

12. Verfahren nach einem der Ansprüche 8 bis 11, wobei eine Zone mit variabler Transparenz (53) zur Simulation eines transparenten Fensters (65), eine lichtdurchlässige Zone (55) zur Simulation eines Wasserzeichens (63) und/oder eine Zone mit dynamischen visuellen Effekten (57) zur Simulation eines Hologramms (62) oder einer farbwechselnden Druckfarbe (64) angewendet wird.

13. Verfahren nach einem der Ansprüche 8 bis 12, ferner umfassend das Generieren einer virtuellen Szene (50), die auf der Virtual- oder Mixed-Reality-Brille (7) betrachtet werden kann.

14. Verfahren nach Anspruch 13, ferner umfassend das Bestimmen eines Blickpunktes des Benutzers (3) auf eine Lichtquelle in der virtuellen Szene (50), um die Zone mit dynamischen visuellen Effekten (57), die lichtdurchlässige Zone (55) und/oder die Zone mit variabler Transparenz (53) zu simulieren.

15. Digitales Speichermedium, umfassend Codeanweisungen, die, wenn sie von einem oder mehreren Prozessoren des Rechners des Systems nach Anspruch 1 ausgeführt werden, das System nach Anspruch 1 veranlassen, die Schritte des Verfahrens zur Simulation eines Banknotenentwurfs (1) auf einem vom Benutzer (3) manipulierbaren physikalischen Substrat (2) nach einem der Ansprüche 8 bis 14 auszuführen.

## Revendications

1. Système de simulation d'une conception de billets (1) sur un substrat physique (2) manipulable par un utilisateur (3), comprenant :
un substrat physique (2) représentatif d'un billet, dans lequel le substrat physique (2) présente au moins un marqueur de suivi (21) sur chaque côté ;
un ordinateur (4) ;
une caméra (6) configurée pour capturer des images d'un utilisateur (3) manipulant le substrat physique (2) ;
des lunettes de réalité virtuelle ou de réalité mixte (7) pour l'utilisateur (3), dans lequel lesdites lunettes (7) sont reliées de manière opérationnelle à l'ordinateur (4) et à la caméra (6) ;
dans lequel l'ordinateur (4) est configuré pour générer un prototype virtuel (5) synchronisé avec le substrat physique (2), dans lequel ledit prototype virtuel (5) est généré au moins par :
- génération d'un maillage 3D (51) correspondant au substrat physique (2) ;
- détection périodique d'un ou plusieurs marqueurs de suivi (21) dans les images capturées par la caméra (6) de l'utilisateur (3) manipulant le substrat physique (2) ;
- extraction de données de position d'au moins une des mains (31) manipulant le substrat physique (2) et de données de transformation du substrat physique (2) par le biais des marqueurs de suivi (21) détectés, les données de transformation étant relatives à une rotation, une translation et/ou une déformation ;
- détermination de transformations dans le substrat physique (2) avec les données de transformation ;
- modification du maillage 3D (51) en fonction des transformations déterminées ;
- simulation, dans le maillage 3D (51) modifié, d'un ou plusieurs éléments de conception (62-65) par application, sur ledit maillage 3D (51) modifié, d'une image de base (52) et d'au moins une zone de transparence variable (53), une zone translucide (55), une zone d'effets dynamiques (57), et/ou un élément tridimensionnel (58), dans lequel les éléments de conception (62-65) peuvent être sélectionnés parmi au moins : un hologramme (62), une encre changeant de couleur (64), une filigrane (63), ou une fenêtre transparente (65) ;
- visualisation du prototype virtuel (5) sur les lunettes (7).

2. Système selon la revendication 1, dans lequel, à partir des images de l'utilisateur (3) manipulant le substrat physique (2) capturées par la caméra (6), l'ordinateur (4) est configuré pour détecter des signaux biométriques relatifs à l'image de base (52) et/ou à au moins un élément de conception simulé (62-65), et pour déterminer si les signaux biométriques détectés sont indicatifs d'une conception de billets (1) appropriée.

3. Système selon la revendication 1 ou 2, comprenant en outre une interface (8) pour demander des informations à partir de l'utilisateur concernant l'image de base (52) et/ou au moins un élément de conception simulé (62-65).

4. Système selon la revendication 2 ou 3, dans lequel l'ordinateur (4) est configuré pour modifier ou valider la conception (1) du billet et les spécifications pour la fabrication dans une imprimerie (9).

5. Système selon l'une quelconque des revendications 1 à 4, dans lequel on applique :
- une zone de transparence variable (53) pour simuler une fenêtre transparente (65),
- une zone translucide (55) pour simuler une filigrane (63), et/ou
- une zone d'effets visuels dynamiques (57) pour simuler un hologramme (62) ou une encre changeant de couleur (64).

6. Système selon l'une quelconque des revendications 1 à 5, dans lequel l'ordinateur (4) est configuré pour générer une scène virtuelle (50) visible sur les lunettes de réalité virtuelle ou mixte (7).

7. Système selon la revendication 6, dans lequel l'ordinateur (4) détermine un point de vue d'utilisateur (3) concernant une source de lumière dans la scène virtuelle (50) pour simuler la zone d'effets visuels dynamiques (57), pour la zone translucide (55) et/ou pour la zone de transparence variable (53).

8. Procédé de simulation d'une conception de billets (1) sur un substrat physique (2) manipulable par un utilisateur (3), comprenant :
- fournir un substrat physique (2) représentatif d'un billet, dans lequel le substrat physique (2) présente au moins un marqueur de suivi (21) sur chaque côté ;
- générer un maillage 3D (51) correspondant au substrat physique (2) ;
- capturer, avec une caméra (6), des images de l'utilisateur (3) manipulant le substrat physique (2) ;
- générer un prototype virtuel (5) synchronisé avec le substrat physique (2), dans lequel le prototype virtuel (5) est visible sur des lunettes de réalité virtuelle ou mixte (7), dans lequel la génération dudit prototype virtuel (5) comprend au moins :
- détecter un ou plusieurs marqueurs de suivi (21) dans les images de l'utilisateur (3) manipulant le substrat physique (2) ;
- extraire des données de position d'au moins une des mains (31) manipulant le substrat physique (2) et des données de transformation du substrat physique (2) relatives à une rotation, une translation et/ou une déformation ;
- déterminer des transformations dans le substrat physique (2) avec les données de transformation ;
- modifier le maillage 3D (51) en fonction des transformations déterminées ;
- simuler, dans le maillage 3D (51) modifié, un ou plusieurs éléments de conception (62-65) pouvant être sélectionnés parmi au moins : un hologramme (62), une encre changeant de couleur (64), une filigrane (63), ou une fenêtre transparente (65) par application, sur ledit maillage 3D (51) modifié, d'une image de base (52) et d'au moins une zone de transparence variable (53), une zone translucide (55), une zone d'effets dynamiques (57), et/ou un élément tridimensionnel (58) ;
- visualiser le prototype virtuel (5) sur les lunettes (7).

9. Procédé selon la revendication 8, comprenant en outre :
- détecter, à partir des images de l'utilisateur (3) manipulant le substrat physique (2) capturées par la caméra (6), des signaux biométriques relatifs à l'image de base (52) et/ou à au moins un élément de conception simulé (62-65), et
- déterminer si les signaux biométriques détectés sont indicatifs d'une conception de billets (1) appropriée.

10. Procédé selon la revendication 8 ou 9, comprenant en outre demander des informations à partir de l'utilisateur (3) par le biais d'une interface (8) concernant l'image de base (52) et/ou au moins un élément de conception simulé (62-65).

11. Procédé selon la revendication 8 ou 10, comprenant en outre modifier ou valider la conception (1) du billet et les spécifications pour la fabrication dans une imprimerie (9).

12. Procédé selon l'une quelconque des revendications 8 à 11, dans lequel on applique une zone de transparence variable (53) pour simuler une fenêtre transparente (65), une zone translucide (55) pour simuler une filigrane (63), et/ou une zone d'effets visuels dynamiques (57) pour simuler un hologramme (62) ou une encre changeant de couleur (64).

13. Procédé selon l'une quelconque des revendications 8 à 12, comprenant en outre la générer une scène virtuelle (50) visible sur lesdites lunettes de réalité virtuelle ou mixte (7).

14. Procédé selon la revendication 13, comprenant en outre déterminer un point de vue d'utilisateur (3) d'une source de lumière dans la scène virtuelle (50) pour simuler la zone d'effets visuels dynamiques (57), pour la zone translucide (55), et/ou pour la zone de transparence variable (53).

15. Support de stockage numérique comprenant des instructions de code qui, lorsqu'elles sont exécutées par un ou plusieurs processeurs de l'ordinateur du système selon la revendication 1, amènent le système selon la revendication 1 à exécuter les étapes du procédé de simulation d'une conception de billets (1) sur un substrat physique (2) manipulable par un utilisateur (3) selon l'une des revendications 8 à 14.
